# EUROPÄISCHE PATENTSCHRIFT

(11) **EP 2 556 394 B1**
(45) Veröffentlichungstag und Bekanntmachung des Hinweises auf die Patenterteilung: **31.10.2018**
(21) Anmeldenummer: 11712273.9
(22) Anmeldetag: 06.04.2011
(51) Int. Cl.: G02B 5/04, G02B 27/00, G02B 17/08, F21V 5/02, F21V 5/04, F21V 5/08, F21V 5/00

(54) **LEUCHTMODUL UND LEUCHTE MIT LEUCHTMODUL**
LIGHTING MODULE AND LAMP HAVING A LIGHTING MODULE
MODULE D'ÉCLAIRAGE ET DISPOSITIF D'ÉCLAIRAGE À MODULE D'ÉCLAIRAGE

(30) Priorität: 08.04.2010 DE 102010014289
(43) Veröffentlichungstag der Anmeldung: 13.02.2013
(73) Patentinhaber: Trilux GmbH & Co. KG, 59759 Arnsberg (DE)
(72) Erfinder: RUDOLPH, Horst, 59067 Hamm (DE); SELTMANN, Stefan, 59821 Arnsberg (DE)
(74) Vertreter: Lippert Stachow Patentanwälte Rechtsanwälte
(86) Internationale Anmeldenummer: PCT/EP2011/055368
(87) Internationale Veröffentlichungsnummer: WO 2011/124615

(56) Entgegenhaltungen:
- EP-A1- 0 496 921
- EP-A1- 1 962 014
- WO-A1-2008/099310
- US-A1- 2008 025 042
- US-A1- 2008 048 553
- US-A1- 2010 061 090

## Beschreibung

Die Erfindung betrifft ein Leuchtmodul mit einem Aufnahmeraum mit einer punktartigen Lichtquelle, wie eine LED, insbesondere für eine Power-LED, und einem optischen System zur Lenkung und zur zumindest teilweisen Kollimation von aus der punktartigen Lichtquelle emittierten Lichtes. Das System weist eine optisch mit dem Aufnahmeraum gekoppelte rotationssymmetrische Kollimatorlinse mit einer optischen Achse und einer Lichteintrittsfläche für das emittierte Licht sowie eine der Kollimatorlinse optisch nachfolgenden Prismenanordnung mit sich senkrecht zur optischen Achse längserstreckenden ersten Prismen auf. Die Kollimatorlinse ist ausgelegt, das über die Lichteintrittsfläche eingekoppelte divergente Licht zu der nachfolgenden Prismenanordnung hin zu lenken und in einer bestimmten Divergenz zu der nachfolgenden Prismenanordnung hin abzugeben, wobei die ersten Prismen in einer Ebene senkrecht zur optischen Achse angeordnet sind. Die Erfindung betrifft ferner eine Leuchte mit dem Leuchtmodul.

Ein Leuchtmodul der eingangs genannten Art ist aus der DE 699 37 544 T2 bekannt. Um eine Arbeitsfläche vorteilhaft möglicht blendfrei auszuleuchten, wird Licht in Längsrichtung einer Leuchte (Ebene C90-C270) von oben über Kreuz auf die zu beleuchtende Fläche gelenkt. Hierzu muss das Licht einer Leuchte asymmetrisch von dem Leuchtmodul abgestrahlt werden. In der DE 699 37 544 T2 wird vorgeschlagen, das in die Kollimatorlinse einkoppelte Licht zum Teil mittels innenseitiger Totalreflexion an einer umfänglichen die Kollimatorlinse begrenzenden Fläche parallel auszurichten und mittels asymmetrischer Prismen asymmetrisch abzulenken. Nachteilig hieran ist, dass mittels eines derartigen Leuchtmoduls lediglich eine eng bündelnde Lichtstärkenverteilungskurve möglich ist und somit die Einsatzmöglichkeiten entsprechend gering sind.

In der DE 103 53 645 B4 wird ein Leuchtmodul für einen Leuchtstoffleuchtkörper mit asymmetrischer Lichtabstrahlung beschrieben, wobei das Leuchtmodul einen komplexen Aufbau mit asymmetrischem Reflektor und Nebenlichtanordnungen aufweist.

Die DE 20 2007 017 946 U1 beschreibt ein Leuchtmodul mit einer Prismenscheibe, wobei zur breiteren Ausleuchtung optische Lücken in der Prismenscheibe vorgesehen sind, durch die auftreffendes Licht ungebrochen und unreflektiert gehen kann. Damit ist zwar zu der durch das asymmetrisch ablenkte Licht beleuchtbare Fläche eine Möglichkeit zur Beleuchtung einer zusätzlichen Fläche gegeben. Diese steht jedoch nicht in Zusammenhang mit der einen beleuchtbaren Fläche bzw. ist, abhängig von der Distanz der zu beleuchtenden Fläche zu dem Leuchtmodul, vollständig von derselben getrennt.

Gemäß EP 1 962 014 A1 weist das Leuchtmodul einen Aufnahmeraum mit einer punktartigen Lichtquelle und ein optisches System zur Lenkung und zumindest partiellen Kollimation von aus der punktartigen Lichtquelle emittierten divergenten Lichtes. Das System umfasst eine optisch mit dem Aufnahmeraum gekoppelte rotationssymmetrische Kollimatorlinse mit einer optischen Achse und einer Lichteintrittsfläche für das emittierte Licht sowie eine der Kollimatorlinse optisch nachfolgende Prismenanordnung mit sich senkrecht zur optischen Achse o längserstreckenden ersten Prismen zu einer zu der optischen Achse asymmetrischen Ablenkung des Lichtes in eine Abstrahlrichtung in einem Winkel größer Null zur optischen Achse auf. Das Hauptaugenmerk ist hier jedoch auf die Befestigung der Prismenanordnung an der Kollimatorlinse gelegt.

In US 2008/025042 A1 wird ein nicht gattungsgemäßes Leuchtmodul mit einer Hintergrundbeleuchtungsanordnung beschrieben. Diese weist eine Lichtquelle, eine Lichtleiterplatte und eine Doppelprismenanordnung mit oberen Prismen und unteren Prismen auf, die auf einem Basisfilm aufgebracht sind. Die über eine Länge des Basisfilms parallel nebeneinander angeordneten oberen Prismen bzw. unteren Prismen sind jeweils kongruent zueinander ausgebildet.

WO 2008/099310 A1 beschreibt eine nicht gattungsgemäße Leuchte mit einem transparenten Trägerkörper, in dessen Aufnahmen jeweils ein Leuchtmodul mit kegelartigem Kollimator und darin angeordneter punktartiger Lichtquelle eingelassen ist.

US 2008/8048553 A1 lehrt ein gattungsgemäßes Leuchtmodul mit Kollimatorlinse und Prismenanordnung. Die Prismenanordnung umfasst eine übliche Fresnellinse, deren Prismen, als erste Prismen ausgebildet, in einer Ebene angeordnet sind. Das von der Kollimatorlinse in einer bestimmten Divergenz zu der nachfolgenden Prismenanordnung abgegebene Licht wird durch die Fresnellinse zu parallelen Lichtstrahlen gebündelt, die parallel zur optischen Achse verlaufen.

Aus US 2010/061090 A1 ist ein nicht gattungsgemäßes Leuchtmodul mit punktartiger Lichtquelle 1 und als Fresnellinse ausgebildete Prismenanordnung 2, aber ohne optisch dazwischengeschaltete Kollimatorlinse bekannt.

EP 0 496 921 A1 offenbart ebenfalls ein nicht gattungsgemäßes Leuchtmodul ohne vorgeschaltete Kollimatorlinse und zudem mit linienartiger Lichtquelle (Leuchtstoffröhre) anstatt punktartiger Lichtquelle. Es ist jedoch ein Reflektor zur Lichtsammlung vorgesehen. Zur Verringerung eines Ausleuchtwinkels ist vorgesehen, mittels einer Prismenplatte A2 das randseitig abstrahlende konvergierende Licht überwiegend zu der optischen Achse S hin zu streuen. Mittig der Prismenplatte sind andere Prismen vorgesehen, die das Licht von der optischen Achse weglenken. Der Erfindung liegt eine Aufgabe zugrunde, ein Leuchtmodul der eingangs genannten Art bereitzustellen, das eine breit strahlende Lichtverteilungskurve aufweist und dennoch einfach aufgebaut und unaufwendig herstellbar ist. Zudem soll das Leuchtmodul gut handhabbar sein.

Die gestellte Aufgabe wird erfindungsgemäß durch die Merkmale des Anspruches 1 gelöst. Vorteilhafte Weiterbildungen werden in den anhängenden Unteransprüchen beschrieben. Die gestellte Aufgabe wird insbesondere dadurch gelöst, dass die ersten Prismen zur Lenkung des divergierenden Lichtes in eine zumindest in etwa parallele Ausrichtung so ausgebildet und/oder in einer radialer Richtungskomponente der Hauptabstrahlrichtung so zueinander angeordnet sind, dass sich ein erstes Prisma und/oder eine Prismengruppen aus ersten Prismen von einem in der radialen Richtungskomponente nachfolgenden ersten Prisma oder einer in der radialen Richtungskomponente nachfolgenden Prismengruppe aus ersten Prismen hinsichtlich eines wirksamen Lichtablenkungsvermögens unterscheiden, dass die ersten Prismen zu einer zu der optischen Achse asymmetrischen Ablenkung des Lichtes in eine Hauptabstrahlrichtung in einem Winkel größer Null zur optischen Achse ausgelegt sind sowie dass die ersten Prismen und/oder Prismengruppen aus ersten Prismen in ihrer Abfolge bezüglich der radialen Richtungskomponenten der Hauptabstrahlrichtung eine schrittweise Änderung von einem entgegen der radialen Richtungskomponente radial äußeren als Umlenkprisma dienenden ersten Prisma zu einem in radialer Richtungskomponente radial äußeren als Brechungsprisma dienenden ersten Prisma aufweisen.

Das in die Kollimatorlinse eingestrahlte Licht kann somit die Kollimatorlinse divergierend verlassen und zu der Prismenanordnung hin gelenkt werden, wodurch das Licht, im Vergleich zu einem abgestrahlten parallelen Licht gemäß der DE 699 37 544 T2, in einem größerem Raumwinkel abgestrahlt werden kann. Die Divergenz eines Lichtes bzw. eines Strahlenbündels kann allgemein über den Raumwinkel beschrieben werden, in dem das Licht divergiert. Über die Divergenz des von der Kollimatorlinse abgestrahlten Lichtes kann somit ein bestimmter im Vergleich zu parallelem Licht größerer Raumwinkel erzielt werden. Dadurch kann eine breitstrahlende Lichtverteilung bewirkt werden, die wiederum eine großflächigere Beleuchtung einer Arbeitsfläche unter verringerten Lichtstärken möglich wird. Infolge seiner Divergenz und der rotationssymmetrischen Ausbildung der Kollimatorlinse weist das die Kollimatorlinse verlassende Licht eine zur optischen Achse achsensymmetrische Lichtverteilung auf. Somit ist das Licht in der optischen Achse in Richtung derselben und außerhalb der optischen Achse entsprechend seiner Divergenz zusätzlich mit einer zunehmenden radialen Komponente nach außen gerichtet.

Die Stärke der Divergenz bzw. die Größe des Raumwinkels, in dem das Licht divergiert, kann über die Form und Abmessungen der Kollimatorlinse beeinflusst werden.

Damit das Licht in zumindest nahezu eine Richtung asymmetrisch zur optischen Achse von dem Leuchtmodul abgestrahlt werden kann, muss also eine Richtungslenkung des divergierenden Lichtes vorgenommen werden. Die tatsächliche Größe der Richtungslenkung hängt von der radialen Richtungskomponente des auf das jeweilige erste Prisma fallenden Licht bzw. dem Bereich mit dem jeweiligen Durchtrittsort des Lichtes durch eine Lichtaustrittsfläche der Kollimatorlinse ab. Es können für die einzelnen Bereiche bezüglich der Lichtaustrittsfläche jeweils entsprechend angepasste Richtungskorrekturen des dort durchgehenden Lichtes erfolgen. Die ersten Prismen können somit so ausgelegt und angepasst sein, dass sie jeweils den auf sie auftreffenden Teil des Lichtes aus der Kollimatorlinse asymmetrisch zur optischen Achse ablenken und zumindest in etwa parallel ausrichten. Infolge des vorgesehenen spezifischen wirksamen Lichtablenkungsvermögens der ersten Prisma und/oder der Prismengruppen aus ersten Prismen können diese so in radialer Richtung der Hauptabstrahlrichtung gruppiert oder angeordnet werden, dass an den ersten Prismen und/oder Prismengruppen jeweils eine spezifische, d.h auf das jeweils auffallende Licht abgestimmte Richtungskorrektur durch Lichtlenkung erfolgen kann. Die ersten Prismen und/oder Prismengruppen aus ersten Prismen können bezüglich ihrer Ausbildung und/oder Orientierung asymmetrisch zur optischen Achse angeordnet sein.

Die Prismenanordnung kann somit gezielt zur Darstellung einer bestimmten asymmetrischen Lichtstärkenverteilung ausgelegt werden. Somit kann mittels der besonderen Prismenanordnung eine großflächige und reflexblendungsfreie Ausleuchtung einer Arbeitsfläche oder eines beispielsweise Gehbereichs für Fußgänger erfolgen. Es kann das Kontrastverhältnis aus bestimmten Blickrichtungen mit Hilfe dieser Optik deutlich erhöht und somit insbesondere am Arbeitsplatz der Sehkomfort verbessert werden. Prinzipiell ist es dank der vorgeschlagenen spezifischen Anordnung und Ausbildung der ersten Prismen und/oder Prismengruppen möglich, das Licht weiter beispielsweise bezüglich einer Hauptrichtung aufzufächern und/oder zu konzentrieren. Ferner kann das Licht mittels der vorgeschlagenen Prismenanordnung in bestimmter Weise bezüglich seiner Ausrichtung eingestellt werden, wobei bei einem parallelen Licht Korrekturen und/oder eine Auffächerung desselben erfolgen kann.

Wie sich einzelne Prismen oder Prismengruppen voneinander unterscheiden, hängt unter anderem von der vorgesehenen Divergenz des auf die Prismen auftreffenden Lichtes sowie von der erwünschten Hauptabstrahlrichtung ab. Um ein nicht zu scharf begrenztes Lichtbündel zu erzeugen, ist es häufig wünschenswert, das Licht nicht exakt parallel auszurichten oder zumindest einige streuende Anteile des Lichtes zu behalten oder, bevorzugt, gezielt zu erzeugen. Dank der verschiedenen Ausbildungen der Prismen sowie weiteren unten erläuterten Vorkehrungen kann diesem Rechnung getragen werden.

In einer bevorzugten Ausbildung des Leuchtmoduls können zwei unterschiedlich wirkende Prismentypen zur asymmetrischen Ablenkung des Lichtes eingesetzt werden. Um beispielsweise einen Teil des Lichtes, das eine radiale Richtungskomponente in Richtung der erwünschten Hauptabstrahlrichtung aufweist, exakter auszurichten, kann das Licht beispielsweise über eine Brechung an dem Prisma entsprechend abgelenkt werden. Weist das aus der Kollimatorlinse emittiere Licht mit einer radialen Komponente gegen die radiale Richtungskomponente der gewünschten Hauptabstrahlrichtung, so kann eine Umlenkung des Lichtes mittels Lichtbrechung nicht mehr ausreichend sein. Zur Abhilfe können hier als Umlenkprismen ausgebildete Prismen vorgesehen sein, die vorzugsweise nach dem Prinzip der Totalreflexion arbeiten.

Somit können die ersten Prismen der Prismenanordnung in ihrer Abfolge bezüglich der radialen Richtungskomponente der Hauptabstrahlrichtung eine schrittweise Änderung von einem entgegen der radialen Richtungskomponente radial äußeren, als Umlenkprisma dienenden Prisma zu einem in radialer Richtungskomponente radial äußeren, als Brechungsprisma dienenden Prisma aufweisen. Hierbei kann in der Praxis ein größerer Schritt in der Ausbildung der benachbarten Prismen im Übergang von einem "schwachen" Umlenkprisma zu einem "starken" Prisma zur Strahlbrechung auftreten. Die exakte Einstellung der Ablenkung des auftreffenden Lichtes kann über die Neigung der als Wirkflanken ausgebildeten Flanken des betreffenden Prismas erfolgen.

Die Prismenanordnung kann lediglich Prismen umfassen, die in einer Ebene angeordnet sind. Hierzu kann die Prismenanordnung beispielsweise unmittelbar die Lichtaustrittsfläche der Kollimatorlinse bilden oder als Folie auf derselben aufgeklebt sein. Vorzugsweise weist die Prismenanordnung eine Prismenplatte mit einer Lichteingangsseite und einer Lichtausgangsseite auf, wobei die Lichteingangsseite vorzugsweise senkrecht zur optischen Achse und parallel beabstandet zu der Lichtausgangsseite der Kollimatorlinse angeordnet ist. Hierbei kann lediglich die Lichteingangsseite oder die Lichtausgangsseite erste Prismen aufweisen. Die Seite ohne Prismen kann als vorzugsweise planare Ebene ausgebildet sein, durch die das auftreffende Licht zumindest nur geringfügig abgelenkt wird. Diese Ebene kann auch so gewölbt ausgebildet sein, dass das auftreffende Licht an jedem Punkt der Ebene senkrecht zu derselben auftrifft und dadurch keine Ablenkung erfährt. Die Prismenplatte kann auch einen oder mehrere Abschnitte ohne Prismen aufweisen, in den das Licht vorzugsweise leicht gestreut durchtreten kann, ohne gezielt in Hauptabstrahlrichtung gebrochen bzw. abgelenkt zu sein.

Vorzugsweise sind an der Lichteingangsseite und der Lichtausgangsseite erste Prismen vorgesehen. Diese doppelprismatische Anordnung ermöglicht stärkere Ablenkung sowie eine feinere und weitgehendere Richtungskorrekturen des durchgehenden Lichtes, da jedes Prisma zumindest eine als Wirkflanke ausgebildete Flanke aufweisen kann, an der das Licht in seinem Strahlengang beeinflussbar ist.

Vorzugsweise weisen die eingangsseitig und ausgangsseitig vorgesehenen ersten Prismen jeweils eine als Wirkflanke ausgebildete Flanke auf. Hierbei kann bei den Brechungsprismen die Flächennormale der Wirkflanken mit der vorgesehenen Richtung des dort auftreffenden Lichtes zur Brechung des zumindest überwiegenden Anteils des Lichtes bei den eingangsseitigen ersten Prismen einen ersten Winkel kleiner 89° und bei den ausgangsseitigen ersten Prismen einen zweiten Winkel von mindestens 41° einschließen. Bekanntermaßen ist die Größe des jeweiligen Winkels werkstoffspezifisch, d.h. abhängig von der jeweiligen Brechungszahl der aneinander grenzenden Medien. Kollimatorlinse und/oder Prismenanordnung können aus Glas gefertigt sein. Als bevorzugter Werkstoff wird ein lichtleitender Kunststoff, insbesondere Acryl oder Polyacrylat, vorgeschlagen, aus dem die Kollimatorlinse und/oder die Prismenanordnung bzw. die Prismenplatte bestehen kann. Vorzugsweise sind die Prismenanordnung bzw. die Prismenplatte und/oder die Kollimatorlinse jeweils einstückig ausgebildet.

Vorzugsweise weisen die als Umlenkprismen dienenden, ausgangsseitigen ersten Prismen jeweils zwei Wirkflanken, eine im Strahlengang des Lichtes der Wirkseite des eingangsseitigen ersten Prismas nachfolgende erste Wirkflanke und eine der ersten Wirkflanke nachfolgende zweite Wirkflanke auf. Hierbei ist die erste Wirkflanke so zu dem Strahlengang des Lichtes angeordnet, dass an ihr eine Totalreflexion des Lichtes erfolgen kann. An der zweiten Wirkflanke kann die Auskopplung des Lichtes aus der Prismenplatte vorzugsweise unter Brechung zur Feinkorrektur des Lichtes erfolgen.

Die ersten Prismen können sich beispielsweise in einer gekrümmten Linie längs erstrecken. Die benachbarten ersten Prismen können hierbei unterschiedliche Krümmungsradien aufweisen, wobei das radial innen liegende erste Prisma einen größeren Krümmungsradius als das radial außen liegende Prisma aufweisen kann. Hierdurch kann, entgegen der Richtung des Krümmungsradius eine Auffächerung des eingekoppelten Lichtes bzw. in Gegenrichtung hierzu eine Konzentration des Lichtes erfolgen. Die ersten Prismen können, in Gruppen zusammengefasst, jeweils auf einen bestimmten Krümmungsradius bezogen sein. Hierbei können die entsprechenden Krümmungsradien der einzelnen Gruppen aufeinander zugerichtet oder voneinander weglaufend angeordnet sein. Sind beispielsweise zwei Gruppen von ersten Prismen vorgesehen, so können diese vorzugsweise symmetrisch zueinander angeordnet sein. Durch diese einzelnen Gruppen kann das jeweils auftreffende Licht asymmetrisch zu einer bestimmten Abstrahlrichtung abgestrahlt werden und hierbei entweder aufgefächert oder konzentriert werden. Sind mehrere Gruppen vorhanden, so können unterschiedliche Effekte hinsichtlich des Auffächerns und/oder des Konzentrieren des Lichtes erzielt werden. Wie unschwer ableitbar, können die Gruppierung und/oder die Längserstreckung der ersten Prismen in weiteren Variationen erfolgen, die ein Fachmann allein aus einem Wissen heraus ableiten kann.

In einer bevorzugten Ausführungsform des Leuchtmoduls sind die ersten Prismen bezüglich ihrer Längserstreckung parallel zueinander und senkrecht zur optischen Achse sowie vorzugsweise senkrecht zur vorgesehenen Hauptabstrahlrichtung angeordnet.

In einer weiter bevorzugten Ausbildung des Leuchtmoduls kann die Prismenplatte einen bezüglich einer Richtung senkrecht zur radialen Richtungskomponente der Hauptabstrahlrichtung mittleren Bereich mit den ersten Prismen aufweisen. Dieser mittlere Bereich kann beidseitig jeweils von einem radial äußeren Bereich mit zweiten Prismen flankiert sein. Diese Prismen können gleich ausgebildet sein. Die zweiten Prismen sind vorzugsweise symmetrisch ausgebildet. Sie erstrecken sich vorzugsweise zumindest in etwa parallel zu den ersten Prismen. Diese radial äußeren Bereiche können dazu beitragen, dass die Lichtstärkenverteilung in der C0-C180 Ebene nicht beeinflusst wird. Der mittlere Bereich der Prismenplatte sorgt für die asymmetrische Umlenkung des Lichtes. Wird eine Fläche von Licht bestrahlt, das mittels der ersten Prismen abgelenkt ist, so kann dank der erzielbaren parallelen Ausrichtung des abgestrahlten Lichtes durch die ersten Prismen sich der beleuchtete Bereich scharf gegenüber dem unbeleuchteten Bereich abgrenzen. Dies kann dazu führen, dass ein Benutzer schneller ermüdet und/oder die scharfe Kontrastierung als unangenehm empfindet. Daher ist es von Vorteil, wenn dieser scharfe Kontrast zwischen der beleuchteten Fläche und unbeleuchteten Fläche gemildert wird. Dank dieser vorgeschlagenen, die ersten Prismen flankierenden zweiten Prismen kann in die zweiten Prismen eingekoppeltes Licht entsprechend gleichmäßig gestreut werden. Zur gleichmäßigen Streuung des Lichtes können die zweiten Prismen symmetrisch und bevorzugt deckungsgleich ausgebildet sein.Vorzugsweise weist die Prismenplatte einen kreisrunden Umriss mit einem Durchmesser auf, der zumindest gleich dem der Lichtaustrittsfläche der Kollimatorlinse ist. Hierdurch kann gewährleistet werden, dass das durch die Lichtaustrittsfläche der Kollimatorlinse austretende Licht zumindest nahezu vollständig durch die Prismenplatte abgelenkt werden kann.

Der Aufnahmeraum für die punktartige Lichtquelle, insbesondere für eine sogenannte Power-LED, ist vorzugsweise in der Kollimatorlinse integriert. Hierzu kann die Power-LED lediglich mit ihrem Licht abstrahlenden Bereich in den Aufnahmeraum hineinragen. Die punktartige Lichtquelle ist vorzugsweise exakt in der optischen Achse angeordnet. In dem Aufnahmeraum ist vorzugsweise Luft gefüllt. Somit kann der Aufnahmeraum unmittelbar von der Lichteintrittsfläche der Kollimatorlinse begrenzt werden. Hierdurch kann das von der Lichtquelle emittierte divergente Licht unmittelbar auf die Lichteintrittsfläche auftreffen. Vorzugsweise ist die Lichteintrittsfläche auf den Aufnahmeraum begrenzt. Die Lichteintrittsfläche kann bezüglich der optischen Achse um einen umfänglichen ersten Bereich und einen zur Prismenanordnung hin an den ersten Bereich angrenzenden, radialen, vorzugsweise kreisrunden zweiten Bereich aufweisen. Dieser zweite Bereich ist vorzugsweise senkrecht zur optischen Achse angeordnet. Der umfängliche erste Bereich kann bezüglich des Aufnahmeraums nach außen hin konvex so gekrümmt ausgebildet sein, dass das durchtretende Licht zumindest in etwa ungebrochen bleibt. Vorzugsweise wird das durch den ersten Bereich der Lichteintrittsfläche durchtretende Licht innenseitig an der Außenkontur der Kollimatorlinse unter Totalreflexion nach unten hin abgelenkt. Durch die Totalreflexion des Lichtes innenseitig der Kollimatorlinse kann das Licht weiter divergent gehalten werden. Über die Totalreflexion kann eine Konzentrierung des Lichtes erfolgen, die von der Höhe des Reflexionswinkels abhängt. Somit kann über die Einstellung des Reflexionswinkels unmittelbar auf die Höhe der Divergenz des reflektierten Lichtes eingewirkt werden. Hierbei muss der Winkel mindestens so groß sein, dass keine parallele Ausrichtung des Lichtes erfolgen kann.

Der radiale kreisförmige zweite Bereich kann vorzugsweise symmetrisch zur optischen Achse in den Aufnahmeraum hinein gewölbt ausgebildet sein. Er kann eine kugelkalottenartige Form aufweisen. Der Aufnahmeraum selbst ist vorzugsweise mit Luft gefüllt. Das radial aus der punktartigen Lichtquelle ausgestrahlte Licht wird somit, wenn es nicht senkrecht auf die Kollimatorlinse auftrifft, zum Einfallslot hin gebrochen. In Folge der Aufwölbung des zweiten Bereichs der Lichteintrittsfläche ist, abhängig vom Abstand von der optischen Achse als mittlere Symmetrieachse des zweiten Bereichs, die Brechung des Lichtes zum Einfallslot vergrößert. Hierdurch kann gegenüber einer reinen radialen Ausbreitung des Lichtes eine Konzentrierung des Lichtes erfolgen, so dass mit Durchlauf des Lichtes durch die Kollimatorlinse zwar eine Verminderung des Raumwinkels des Lichtes eintritt, die jedoch im Vergleich zu einem parallelen Licht vergleichsweise gering ausfallen kann.

Die Lichtaustrittsfläche ist vorzugsweise symmetrisch zur optischen Achse ausgebildet. Die Lichtaustrittsfläche kann einen radial mittig angeordneten inneren Abschnitt mit kreisförmigem Umriss aufweisen. Hierbei ist die Kollimatorlinse vorzugsweise so ausgebildet, dass das über den zweiten Bereich der Lichteintrittsfläche in die Kollimatorlinse eingekoppelte Licht zumindest weitgehend auf den inneren Abschnitt der Lichtaustrittsfläche auftrifft. Der innere Abschnitt selbst weist vorzugsweise eine bezüglich der Kollimatorlinse nach außen konvex gewölbte Form auf. Diese Wölbung ist vorzugsweise so konzipiert, dass das auffallende Licht nicht oder nur geringfügig gebrochen wird. Der innere Abschnitt kann, wie im Folgenden bei dem kreisringförmigen Abschnitt ebenfalls beschrieben, mit einer wellenförmigen Struktur ausgebildet sein.

An den inneren Abschnitt radial anschließend, weist die Lichtaustrittsfläche einen kreisringartigen äußeren Abschnitt auf. Dieser kreisringartige äußere Abschnitt ist vorzugsweise bezüglich der Kollimatorlinse nach innen konkav gewölbt. Vorzugsweise ist vorgesehen, dass das über den ersten Bereich in die Kollimatorlinse eingekoppelte Licht über Totalreflexion innenseitig an der Außenkontur der Kollimatorlinse auf diesen äußeren Abschnitt der Lichtaustrittsfläche auftritt. Dabei kann das Licht mit Verlassen der Kollimatorlinse radial nach außen hinweggebrochen werden. Dadurch kann dieses Licht vorteilhaft sogar weiter aufgefächert werden, so dass eine mittige Konzentration des Lichtes vermieden werden kann. Der kreisringartige äußere Abschnitt kann eine wellenartige Struktur aufweisen, die durch konzentrisch zur optischen Achse angeordnete Ringe gebildet wird. Infolge dieser wellenartigen Struktur kann das auftreffende Licht entsprechend gestreut werden. Hierdurch trifft das aus der Kollimatorlinse austretende Licht in unterschiedlichen Winkeln auf die nachfolgende Prismenanordnung, sodass hier eine entsprechend diffuse Streuung des Lichtes an der Prismenanordnung auftreten kann. Dieses trägt zur oben erwähnten Kontrastminderung bei, das heißt, hierdurch können die Grenzen zwischen der beleuchteten Fläche und unbeleuchteten Fläche verwischt werden. Anstatt dieser wellenartigen Struktur oder Abstufung des äußeren Abschnittes kann auch eine beispielsweise körnige oder gering mattierte Oberfläche vorgesehen sein, die eine unregelmäßige Streuung des Lichtes hervorrufen kann.

Das optische System kann in einer weiter bevorzugten Ausbildung des Leuchtmoduls zumindest einen optischen Ausgang zur Auskopplung von Teillicht aufweisen. Vorzugsweise ist dieser Ausgang zwischen Lichteintrittsfläche und Lichtaustrittsfläche der Kollimatorlinse vorgesehen. Der optische Ausgang kann beispielsweise durch eine bezüglich der optischen Achse umfänglichen Mantelfläche gebildet sein, die sich axial von der Lichtaustrittsfläche der Kollimatorlinse bis zu dem Bereich der Außenkontur der Kollimatorlinse erstreckt, an der über den zweiten Bereich eingekoppeltes Licht total reflektiert wird. Somit kann Licht aus der Kollimatorlinse radial nach außen durch den optischen Ausgang aus der Kollimatorlinse ausgekoppelt werden.

Vorzugsweise ist vorgesehen, dass anschließend an den optischen Ausgang Lichtleiter vorgesehen sind, die das Licht weiter streuen und somit die Kontrastminderung infolge ungerichteter Beleuchtung der zur beleuchtenden Fläche beitragen.

Es kann eine Leuchte mit einem Leuchtmodul gemäß einer der zuvor beschriebenen Ausführungsformen vorgesehen sein. Vorzugsweise weist die Leuchte mindestens zwei Leuchtmodule auf. Hierbei kann an der Leuchte bezüglich einer Längsrichtung endseitig jeweils mindestens ein Leuchtmodul so angeordnet sein, das sich deren Hauptabstrahlrichtungen kreuzen. Die Ausrichtungen der Hauptabstrahlrichtungen können so ausgebildet sein, dass sie symmetrisch zu einer C0-C180 bzw. C90-C270-Ebene symmetrisch ausgerichtet sind. Wie oben ausgeführt, ist die C0-C180-Ebene eine senkrechte Symmetrieebene in Längsrichtung einer Leuchte. Entsprechend ist die C90-C270-Ebene eine senkrechte Symmetrieebene senkrecht zur C0-C180-Ebene.

Für eine homogene Ausleuchtung der Fläche eignet sich besonders eine Lichtstärkenverteilung, welche bei frontaler Betrachtung unter 0 Grad geringere Lichtstärken aufweist als unter seitlicher Betrachtung von beispielsweise 30 Grad. Wie oben beschrieben, kann das Leuchtmodul einen optischen Ausgang zur Einkopplung von Licht in einen Lichtleiter aufweisen. Mittels dieses Lichtleiters kann ein scharfer Kontrast zwischen der beleuchteten Fläche durch die Prismenanordnung und der unbeleuchteten Fläche gemindert werden, da der hier als Kontrastminderungselement wirkende Lichtleiter selbst Licht streuend ausgelegt sein kann. Damit kann ein weiterer Verlauf eines in den Lichtleiter eingekoppelten Lichtstrahls undefiniert sein. Ebenso kann durch den Lichtleiter der Kontrast zwischen der beleuchteten Lichtausgangsseite des Leuchtmoduls und einer vorgesehen Halterung und/oder vorgesehenen Gehäuseteilen des Leuchtmoduls herabgesetzt werden. Wie anhand der Ausführungsformen gezeigt, eignet sich der Lichtleiter vorzüglich als gestalterisches Element der Leuchten, wobei beispielsweise das Leuchtmodul in einer Ebene oberhalb der Prismenanordnung vollständig das Leuchtmodul flächig umgeben kann. Ist beispielsweise eine Reihe von Leuchtmodulen in der Leuchte vorgesehen, so können diese beispielsweise in einem Raster angeordnet sein, wobei die Lichtleiter diese Leuchtmodule netzartig miteinander verbinden können. Hierbei können die Lichtleiter stoffschlüssig zu einem einstückigen Körper verbunden sein.

Die vorliegende Erfindung wird im Folgenden anhand mehrerer in einer Zeichnung dargestellter Ausführungsformen näher erläutert. In der Zeichnung zeigen:
- Fig. 1:: eine Querschnittsansicht einer ersten Ausführungsform eines Leuchtmoduls mit Halterung und optischem System,
- Fig. 2:: eine schematische Schnittansicht des optischen Systems des Leuchtmoduls gemäß Figur 1 mit Kollimatorlinse und Prismenplatte sowie eingezeichneten Strahlengängen,
- Fig. 3:: eine Querschnittsansicht der Prismenplatte mit eingezeichnetem Strahlenverlauf,
- Fign. 4a: und 4b: jeweils eine Längsschnittansicht einer weiteren Ausführungsform der Prismenplatte,
- Fig. 5:: eine Unteransicht auf das Leuchtmodul gemäß Fig.1,
- Fign. 6a-d:: jeweils eine Unteransicht auf eine weitere Ausführungsform der Prismenplatte,
- Fig. 7:: die Längsschnittsansicht des Leuchtmoduls, jedoch hier mit einem besonderen Strahlenverlauf,
- Fig. 8:: eine Unteransicht auf eine Leuchte mit einer Reihe von symmetrisch angeordneten Leuchtmodulen,
- Fig. 9:: eine Längsschnittdarstellung gemäß dem Längschnittsverlauf IX-IX in Fig. 8 und
- Fig. 10:: eine Längsschnittsansicht einer weiteren Ausführungsform der Leuchte mit Leuchtmodulen.

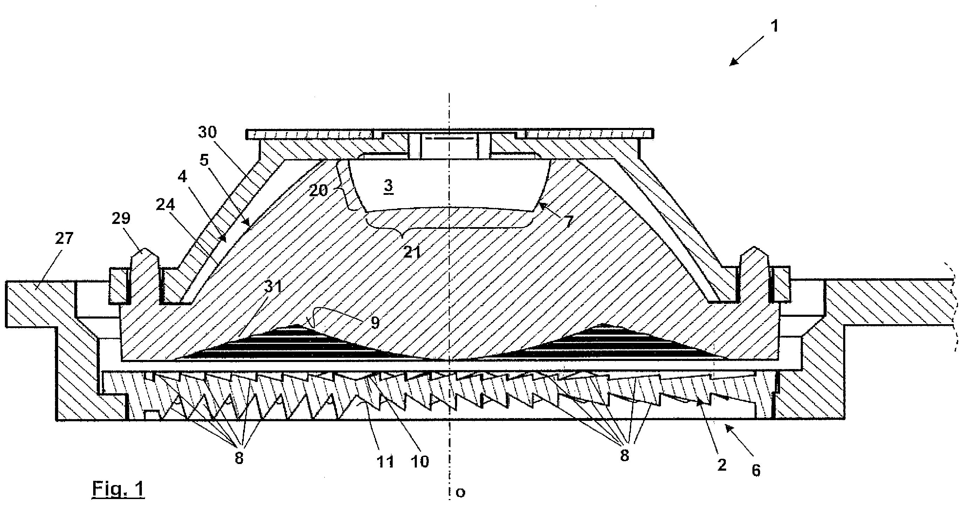

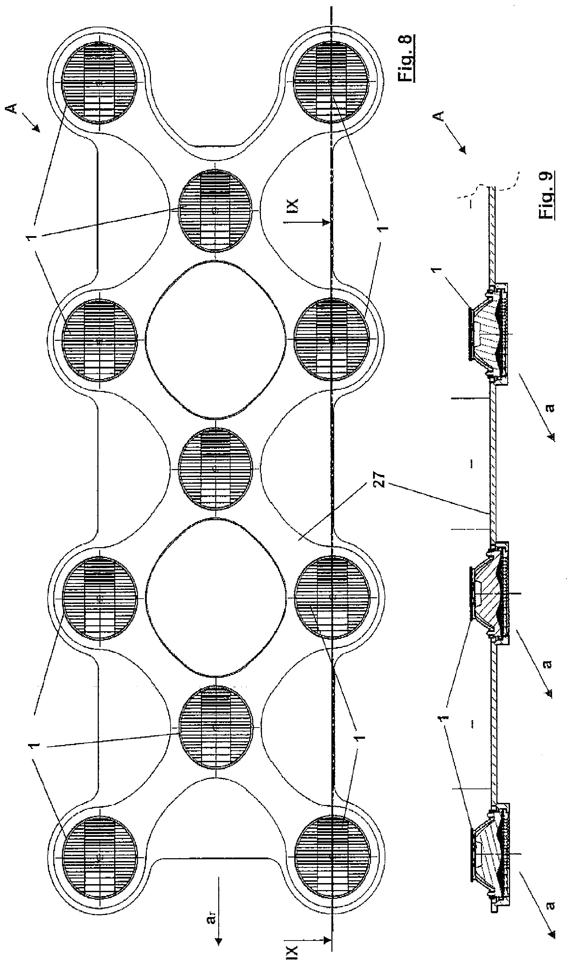

In den Figuren 1-7 wird jeweils in verschiedenen Ansichten ein Leuchtmodul 1 bzw. eine Prismenplatte 2 als Bauteil des Leuchtmoduls 1 dargestellt. In den Figuren 8-10 wird eine Leuchte A mit Leuchtmodulen 1 in verschiedenen Ansichten wiedergegeben.

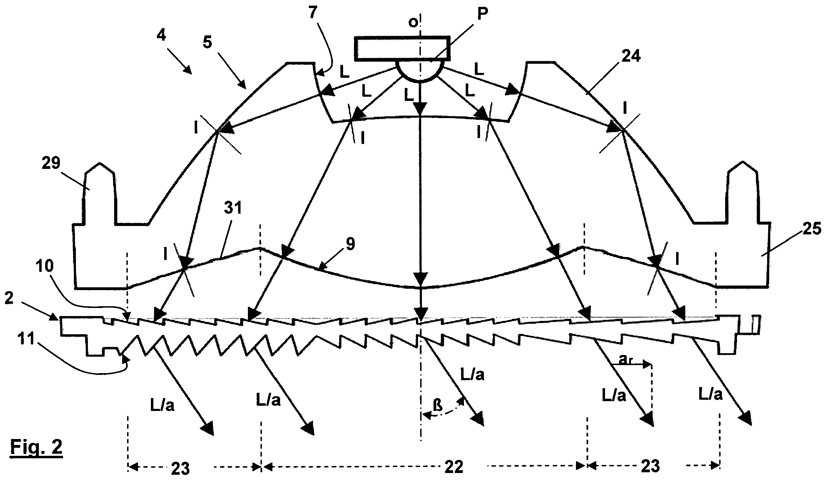

Das Leuchtmodul 1 weist einen Aufnahmeraum 3 für eine punktartige Lichtquelle, hier für eine Power-LED P auf, wobei die Power LED P, wie in Fig. 2 gezeigt, mit ihrem Licht erzeugenden halbkreisförmigen Bereich mittig in den Aufnahmeraum 3 hineinragt. Das Leuchtmodul 1 umfasst zudem ein optisches System 4 zur Lenkung des aus der Power-LED P emittierten Lichtes L.

Das optische System 4 weist eine optische Achse o, eine mit dem Aufnahmeraum 3 optisch gekoppelte, zu der optischen Achse rotationssymmetrische Kollimatorlinse 5 und eine der Kollimatorlinse 5 optisch nachfolgende Prismenanordnung 6 mit der Prismenplatte 2 auf. Der Aufnahmeraum 3 ist in der Kollimatorlinse 5 integriert, wobei er durch eine Lichteintrittsfläche 7 der Kollimatorlinse 5 begrenzt wird. Die Prismenanordnung 6 umfasst sich senkrecht zur optischen Achse o längs erstreckende erste Prismen 7 zu einer zu der optischen Achse o asymmetrischen Ablenkung des Lichtes L in eine Hauptabstrahlrichtung a in einem Winkel β von hier etwa 30° (Figur 2) zur optischen Achse o auf.

Die Kollimatorlinse 5 ist so ausgelegt, dass sie das aus der Power-LED P emittierte divergente Licht L in einem bestimmten Raumwinkel oder Divergenz in Richtung der Prismen 7 hin lenkt. Dies ist insbesondere in der Fig. 2 mit dem Verlauf des Lichtes in verschiedenen Bereichen der Kollimatorlinse 5 schematisch dargestellt. Infolge der Beibehaltung eines divergenten Ausbreitungsverhaltens des Lichtes L wird dieses, bis auf das Licht L exakt in Richtung der optischen Achse o verlaufend, aus der Kollimatorlinse 5 durch eine vorgesehene Lichtaustrittsfläche 9 mit einer radialen Richtungskomponente ausgekoppelt und auf die Prismenplatte 2 gelenkt. Die Prismenplatte 2 ist senkrecht zur optischen Achse o und parallel beabstandet zu der Lichtaustrittsfläche 9 der Kollimatorlinse 5 angeordnet. Die ersten Prismen 8 sind so ausgebildet und so in der Prismenplatte 2 angeordnet, dass das bezüglich der optischen Achse o spiegelsymmetrisch divergierende Licht L mit Durchgang durch die ersten Prismen 8 in Hauptabstrahlrichtung a umgelenkt wird. Da aufgrund der spiegelsymmetrischen Divergenz des Lichtes L die radialen Richtungskomponenten des Lichtes L eine rotationssymmetrische Verteilung aufweisen, muss das Licht L, das radial mit einer Richtungskomponente entgegen der Hauptabstrahlrichtung a von der Kollimatorlinse 5 abgestrahlt wird, stärker umgelenkt werden, als das Licht L, das mit Abstrahlung von der Kollimatorlinse 5 bereits eine radiale Richtungskomponente in Hauptabstrahlrichtung a aufweist. Dies impliziert, dass die ersten Prismen 8 bezüglich ihrer Ausbildung und Orientierung asymmetrisch zur optischen Achse o angeordnet sein müssen.

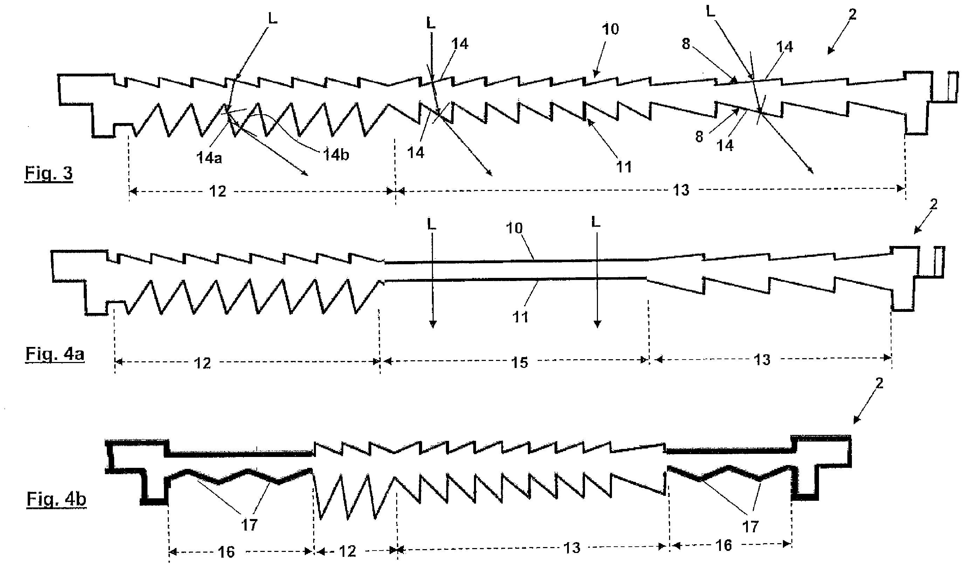

Die Prismenplatte 2 weist eine Lichteingangsseite 10 zur Einkopplung des Lichtes L und eine Lichtausgangsseite 11 zur Auskopplung des Lichtes auf, wobei in den hier gezeigten Ausführungsbeispielen an beiden Seiten 10, 11 erste Prismen 8 vorgesehen sind, die diese Seiten 10, 11 zumindest abschnittsweise bilden. Hierdurch kann das Licht L in seinem Durchgang durch die Prismenplatte 2 entsprechend stärker und/oder differenzierter gelenkt werden. In den hier gezeigten Ausführungsbeispielen der Prismenplatte 2 gemäß den Figuren 3 und 4 sind die ersten Prismen 8 hinsichtlich ihrer Funktion zu zwei Gruppen zusammengefasst, wobei die in einem bezüglich der radialen Richtungskomponente aᵣ vorderen Bereich 12 angeordneten ersten Prismen 8 als Umlenkprismen dienen, während die in einem bezüglich der radialen Richtungskomponente aᵣ der Hauptabstrahlrichtung a hinteren Bereich 13 angeordneten ersten Prismen 8 als Brechungsindex dienen.

Wie insbesondere in Fig. 3 gezeigt, wird das in dem hinteren Bereich 13 auftreffende Licht L an den als Wirkflanken 14 dienenden Flanken des eingangsseitigen ersten Prismas 8 von der Hauptabstrahlrichtung a weg und an dem ausgangsseitigen ersten Prisma 8 zu der Hauptabstrahlrichtung a hin gebrochen. Hierdurch wird insbesondere in dem in Fig. 8 rechten Teil des hinteren Bereichs 13 lediglich eine Feinkorrektur zur Ausrichtung des Lichtes L in Hauptabstrahlrichtung a vorgenommen. Hingegen wird das in dem vorderen Bereich 12 auftreffende Licht L mit Durchgang durch die Prismenplatte 2 an der Wirkflanke 14 des eingangsseitigen ersten Prismas 8 zur Hauptabstrahlrichtung a hin gebrochen und an einer ersten Wirkflanke 14a des ausgangsseitigen ersten Prismas 8 zur Hauptabstrahlrichtung a hin total reflektiert, um mit Auftreffen auf eine zweite Wirkflanke 14b des ausgangsseitigen ersten Prismas 8 unter Auskopplung aus der Prismenplatte 2 erneut in Richtung der Hauptabstrahlrichtung a gebrochen zu werden. Somit wird das Licht L an den Wirkflanken 14, 14a, 14b jeweils ein Stück in Richtung der Hauptabstrahlrichtung a umgelenkt, um mit Auskopplung aus der Prismenplatte 2 zumindest etwa in Hauptabstrahlrichtung a weiter zu verlaufen.

Eine gewisse Mittelstellung zwischen diesen beiden beschriebenen Strahlengängen durch die ersten Prismen in dem Bereich 12 beziehungsweise 13 nimmt der Strahlengang Lichtes L durch ein erstes Prisma 8 in einem hier linken Teil des hinteren Bereichs 13 ein. Das hier auftreffende Licht L weist hier nahezu in Richtung der optischen Achse o, sodass der zu korrigierende radiale Richtungsanteil des Lichtes L wesentlich geringer ist als der des Lichtes L, das in den vorderen Bereich 12 eingestrahlt wird. Zudem weist das eingangsseitige erste Prisma 8 in dem hier linken Teil des hinteren Bereichs 13 eine stärker angestellte Wirkflanke 14 auf, sodass das Licht bezüglich eines Einfallslotes l, hier rechts davon, auf die Wirkflanke 14 auftrifft und dadurch zur Hauptabstrahlrichtung a hin gebrochen werden kann. Dies trifft auch für das Licht L zu, das auf die ersten Prismen 8 in dem vorderen Bereich 12 auftrifft, während das Licht L, das in den hier rechten Teil des hinteren Bereichs 13 auf die ersten Prismen 8 auftrifft, aufgrund deren Orientierung zu dem Einfallslot l von der Hauptabstrahlrichtung weg gebrochen wird. Die in der Fig. 3 exemplarisch dargestellten drei Strahlungsgänge des Lichtes L zeigen, dass die Lenkung des Lichtes mit Durchgang durch die Prismenplatte 2, um das divergierende Licht L in Hauptabstrahlrichtung a umzulenken, von Prisma zu Prisma unterschiedlich ist. Ferner wird deutlich, dass über die Anstellung der Wirkflanken 14, 14a, 14b der Strahlengang des Lichtes L stark beeinflussbar ist, während die Höhe der Brechung oder Reflexion von den spezifischen Brechungszahlen der eingesetzten optischen Werkstoffe beziehungsweise der optischen Umgebung (Luft) sowie von dem geometrischen Zusammenwirken der ersten Prismen 8 und dem Strahlengang des Lichtes L abhängt.

In den Figuren 4a und 4b werden zwei weitere Ausführungsformen der Prismenplatte 2 gezeigt, wobei diese hier ähnliche erste Prismen wie die in Fig. 3 gezeigte Ausführungsform der Prismenplatte 2 aufweist. In der gemäß Fig. 4a gezeigten Ausführungsform der Prismenplatte 2 weist dieselbe in einem mittleren Bereich 15 zwei planparallele Oberflächen auf, durch die das auftreffende Licht L ungehindert fallen kann, ohne asymmetrisch abgelenkt zu werden.

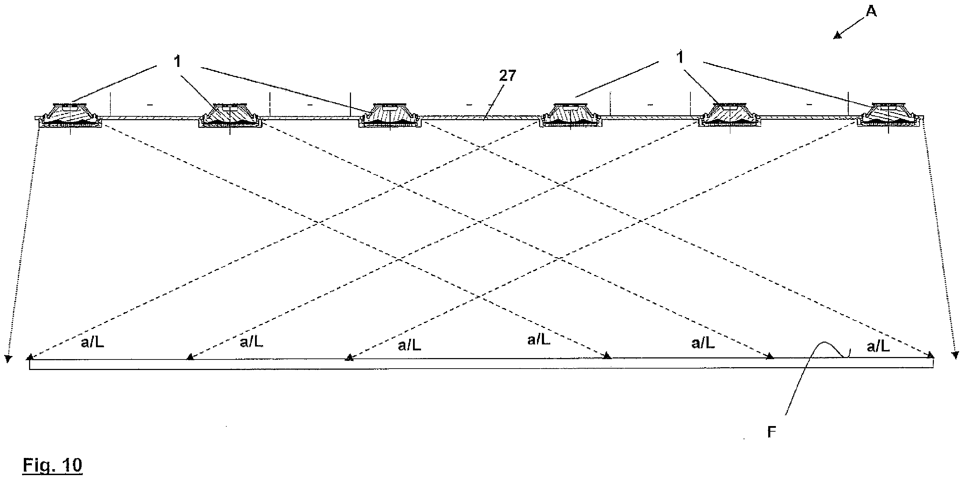

Die Ausführungsform der Prismenplatte gemäß Fig. 4b weist zwei äußere Bereiche 16 auf, bei denen die Lichteingangsseite 10 ausgebildet ist und die Lichtausgangsseite 11 symmetrische, deckungsgleiche zweite Prismen 17 angeordnet sind. Hierdurch wird das Licht nicht in Hauptabstrahlrichtung a asymmetrisch abgelenkt, sondern mehr oder minder diffus gestreut. Dies trägt dazu bei, dass ein oben bereits beschriebener Kontrast zwischen einer in Figur 10 dargestellten beleuchteten Fläche F und einer unbeleuchtete Fläche gemildert wird.

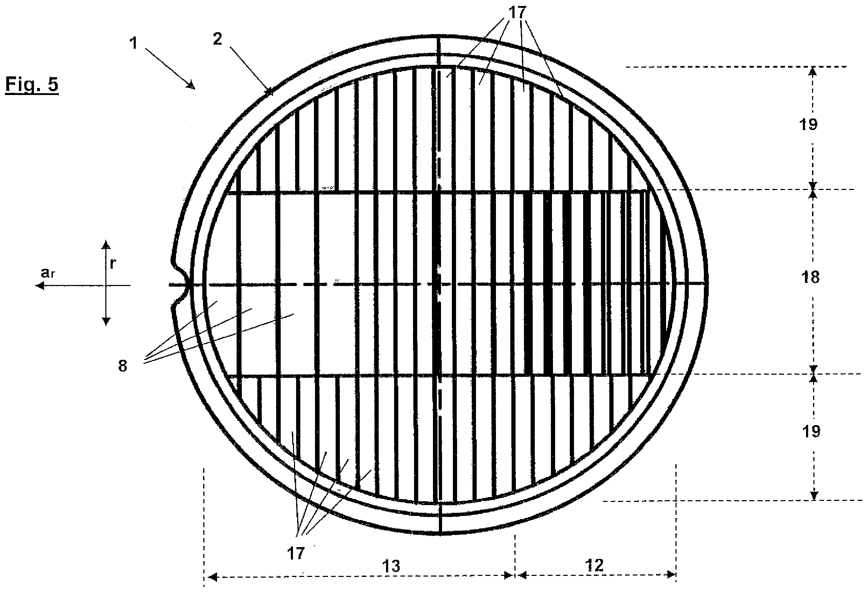

In Fig. 5 wird das Leuchtmodul 1 in einer Unteransicht auf die Prismenplatte 2 gezeigt, die hier kreisrund ausgebildet ist. Deutlich erkennbar sind bezüglich einer Richtung r senkrecht zur radialen Richtungskomponente aᵣ der Hauptabstrahlrichtung a ein mittlerer Bereich 18 mit den ersten Prismen 8 und zwei radial äußere Bereiche 19 mit hier ebenfalls zweiten Prismen 17, wobei die Prismen 8, 17 parallel zueinander und senkrecht zur optischen Achse o ausgerichtet sind. Mittels der zweiten Prismen 17 in den äußeren Bereichen 19 kann ebenfalls eine oben beschriebene Kontrastminderung erzielt werden.

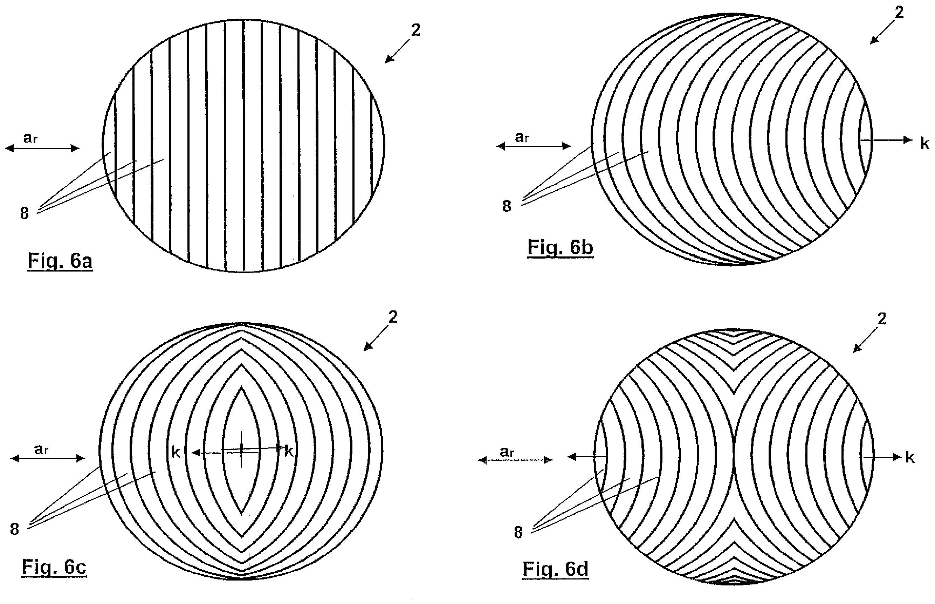

In den Figuren 6a-d wird schematisch gezeigt, dass sich die ersten Prismen 8 nicht zwangsläufig linear längs erstrecken müssen, sondern beispielsweise einen gebogenen Verlauf aufweisen können. Dies hat zur Folge, das auftreffendes Licht unter asymmetrischer Auslenkung in Krümmungsrichtung k konzentriert oder gegen Krümmungsrichtung k aufgefächert werden kann.

Zu Fig. 2 gewandt, wird im Folgenden der besondere Strahlengang des Lichtes L durch die Kollimatorlinse 5 beschrieben. Anzumerken ist, dass Kollimatorlinse 5 und Prismenplatte 2 jeweils einstückig aus lichtleitendem Kunststoff, hier Acrylat, hergestellt sind. Sofern bei dem Strahlengang des Lichtes L durch die Kollimatorlinse 5 eine Brechung oder eine Totalreflexion auftritt, ist an diesen Stellen das jeweils zugehörige Einfallslot l eingezeichnet. Wie unmittelbar ersichtlich, bestimmt die Größe des jeweiligen Reflexionswinkels, inwieweit das reflektierte Licht L konzentriert wird, ohne seinen erwünschten divergierenden Ausbreitungscharakter zu verlieren.

Die Lichteintrittsfläche 7 der Kollimatorlinse 5 weist einen bezüglich der optischen Achse o umfänglichen ersten Bereich 20 und einen zur Prismenanordnung hin an dem ersten Bereich 20, radial zweiten Bereich 21 auf. Der erste Bereich 20 ist bezüglich der Kollimatorlinse 5 so konkav ausgebildet, dass das Licht L unabgelenkt hindurch treten kann. Der zweite Bereich 21 ist hingegen bezüglich der Kollimatorlinse 5 konvex nach außen gewölbt, sodass das hier auftretende Licht L zum Einfallslot l hin gebrochen wird.

Die Lichtaustrittsfläche 9 der Kollimatorlinse 5 umfasst einen radialen mittig angeordneten inneren Abschnitt 22 mit kreisförmigem Umriss für das in den zweiten Bereich 21 in die Kollimatorlinse 5 eingekoppelte Licht L. Ferner weist die Lichtaustrittsfläche 9 einen radialen an den inneren Abschnitt 22 anschließenden kreisringartigen äußeren Abschnitt 23 über den ersten Bereich 20 in die Kollimatorlinse 5 eingekoppeltes Licht L auf. Der innere Abschnitt 22 ist bezüglich der Kollimatorlinse 5 konvex nach außen gewölbt, während der äußere Abschnitt 23 bezüglich der Kollimatorlinse 5 konkav nach innen gewölbt ausgebildet ist. Infolge der konvexen Form des inneren Abschnittes 22 wird das Licht L aus dem über den zweiten Bereich 21 eingekoppelte Licht nicht weiter abgelenkt, während das auf den äußeren Abschnitt 23 auftreffende Licht mit einer Komponente radial nach außen abgelenkt wird. Dieses Licht L wird über den ersten Bereich 20 in die Kollimatorlinse 5 eingekoppelt und innenseitig der Außenkontur 24 total reflektiert.

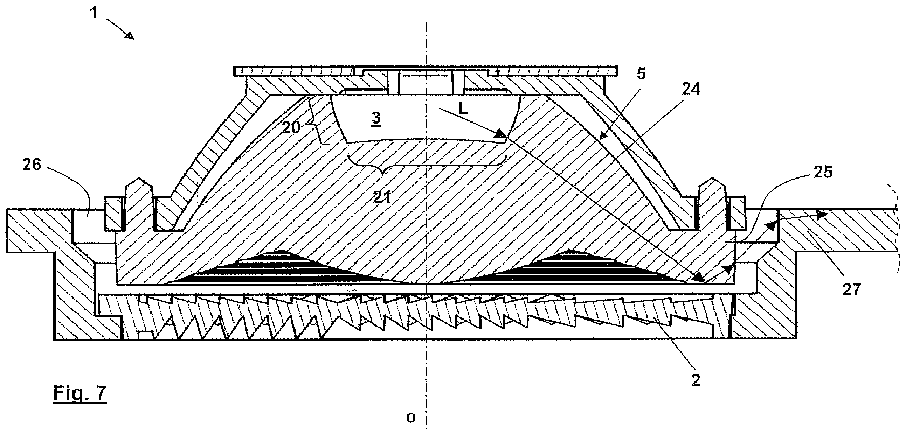

Radial außen an der Kollimatorlinse 5 ist ein umfänglich verlaufender optischer Ausgang 25 zur Auskopplung eines Teil des Lichtes L vorgesehen, wobei das Licht L radial nach außen aus der Kollimatorlinse 5 ausgekoppelt wird. Ein entsprechender Strahlengang ist in Fig. 7 dargestellt. Wie diesem entnehmbar ist, wird insbesondere das Licht L, das durch den ersten Bereich 20 in die Kollimatorlinse 5 eingekoppelt ist, jedoch nicht an der Außenkontur 24 total reflektiert wird, seitlich soweit über den äußeren Abschnitt 23 der Lichtaustrittsfläche 9 übergreifend abgelenkt, dass es über Totalreflexion in den optischen Ausgang 25 hinein geleitet wird.

Beabstandet zum optischen Ausgang 24 durch einen Luftraum 26, ist ein Lichtleiter 27 vorgesehen, der die Kollimatorlinse 5 und die Prismenplatte 2 umfänglich umgibt. Dieser Luftraum 26 erstreckt sich weiter zwischen Lichtaustrittsfläche 9 der Kollimatorlinse 5 und Lichteingangsseite 10 der Prismenplatte 2. Durch die Auskopplung eines Teillichtes in den Lichtleiter 27 wird die Umgebung des Leuchtmoduls 1 erhellt, sodass hierdurch ebenfalls eine oben beschriebene Kontrastminderung stattfinden kann. Der Lichtleiter 27 ist zudem Teil einer Halterungsvorrichtung 28, hier zur Halterung der Prismenplatte 2. Damit kann, wenn auch nur geringfügig, Licht aus der Prismenplatte 2 in den Lichtleiter 27 eingekoppelt werden. Zu ihrer Halterung weist die Kollimatorlinse 5 einen umfänglich verlaufenden Halterungsvorsprung 29 auf, der in einem die Kollimatorlinse 5 gewölbeartig übergreifenden Halterungsbogen 30 lagefixierend eingreift.

Der innere Abschnitt 22 der Lichtaustrittsfläche 9 der Kollimatorlinse 5 weist ein wellenartiges Profil 31 auf, wodurch das hier auftreffende Licht L nicht exakt in eine Richtung sondern diffuser gestreut wird. Damit wird der Lichtanteil, der exakt in Hauptabstrahlrichtung a asymmetrisch zur optischen Achse o abgelenkt wird, zugunsten der oben beschriebenen Kontrastminderung erhöht.

Die Figuren 8-10 zeigen zwei verschiedene Ausführungsformen der Leuchte A. Die Leuchte A weist eine Reihe von Leuchtmodulen 1 auf, die spiegelsymmetrisch zueinander angeordnet sind. In der in den Figuren 8 und 9 gezeigten Ausführungsform der Leuchte A sind die Leuchtmodule 1 so angeordnet, dass sie ihr Licht in eine gemeinsame Hauptabstrahlrichtung a asymmetrisch zu der hier senkrecht zur Papierebene stehenden optischen Achse o abstrahlen. In Fig. 10 hingegen sind die Leuchtmodule der Leuchte A gemäß Fig. 10 so angeordnet, dass die hier in einer Schnittdarstellung gezeigten Leuchtmodule 1, die linksseitig angeordnet sind, Licht L nach rechts abstrahlen, während die rechtsseitig angeordneten Leuchtmodule 1 Licht L nach links hin abstrahlen. Dadurch wird die Arbeitsfläche F von beiden Seiten her kreuzartig beleuchtet, sodass eine mögliche Blendgefahr im Vergleich zu einem senkrecht auf die Arbeitsfläche F auftreffenden Licht deutlich vermindert wird.

Wie insbesondere der Fig. 8 entnehmbar, sind die Leuchtmodule 1 in ihre Lichtleiter 27 eingebettet, wobei die Lichtleiter 27 stoffschlüssig zu einem einstückigen Körper verbunden sind. Wie bereits anhand der in Fig. 8 gezeigten Leuchte A ersichtlich, erlaubt der erfindungsgemäße Aufbau des Leuchtmoduls 1 mit den Lichtleitern 27 nicht nur eine wesentlich verbesserte Beleuchtung einer Arbeitsfläche F, sondern auch ein besonders eindrucksvolles Design der Leuchte A.

### Bezugszeichenliste

- 1: Leuchtmodul
- 2: Prismenplatte
- 3: Aufnahmeraum
- 4: optisches System
- 5: Kollimatorlinse
- 6: Prismenanordnung
- 7: Lichteintrittsfläche
- 8: erstes Prisma
- 9: Lichtaustrittsfläche
- 10: Lichteingangsseite
- 11: Lichtausgangsseite
- 12: vorderer Bereich
- 13: hinterer Bereich
- 14, 14a, 14b: Wirkflanke
- 15: mittlerer Bereich
- 16: äußerer Bereich
- 17: zweites Prisma
- 18: mittlerer Bereich
- 19: äußerer Bereich
- 20: erster Bereich
- 21: zweiter Bereich
- 22: innerer Abschnitt
- 23: äußerer Abschnitt
- 24: Außenkontur
- 25: optischer Ausgang
- 26: Luftraum
- 27: Lichtleiter
- 28: Halterungsvorrichtung
- 29: Halterungsvorsprung
- 30: Halterungsbogen
- 31: wellenartiges Profil
- A: Leuchte
- F: Arbeitsfläche
- P: Power-LED
- L: Licht
- o: Achse
- a: Hauptabstrahlrichtung
- aᵣ: radiale Richtungskomponente
- β: Winkel
- l: Einfallslot
- r: Richtung
- k: Krümmungsrichtung

## Patentansprüche

1. Leuchtmodul mit einem Aufnahmeraum (3) mit einer punktartigen Lichtquelle und einem optischen System (4) zur Lenkung und zumindest teilweisen Kollimation von aus der punktartigen Lichtquelle emittierten divergenten Lichtes (L),
wobei das System (4) eine optisch mit dem Aufnahmeraum (3) gekoppelte rotationssymmetrische Kollimatorlinse (5) mit einer optischen Achse (o), in der die punktartige Lichtquelle angeordnet ist, und mit einer Lichteintrittsfläche (7) für das emittierte Licht, sowie eine der Kollimatorlinse (5) optisch nachfolgende Prismenanordnung (6) mit sich senkrecht zur optischen Achse (o) längserstreckenden ersten Prismen (8) aufweist, wobei die Kollimatorlinse (5) ausgelegt ist, das über die Lichteintrittsfläche (7) eingekoppelte divergente Licht (L) in einer bestimmten Divergenz zu der nachfolgenden Prismenanordnung (6) hin abzugeben und wobei die ersten Prismen (8) in einer Ebene senkrecht zur optischen Achse (o) angeordnet sind.
**dadurch gekennzeichnet, dass** die ersten Prismen zu einer zu der optischen Achse (o) asymmetrischen Ablenkung des Lichtes (L) in eine Hauptabstrahlrichtung (a) in einem Winkel (β) größer Null zur optischen Achse (o) ausgelegt sind, wobei
die ersten Prismen (8) zur Lenkung des divergierenden Lichtes (L) in eine zumindest in etwa parallele Ausrichtung so ausgebildet und/oder in einer radialen Richtungskomponente (aᵣ) der Hauptabstrahlrichtung (a) so zueinander angeordnet sind, dass sich ein erstes Prisma (8) und/oder eine Prismengruppe aus ersten Prismen (8) von einem in der radialen Richtungskomponente (aᵣ) nachfolgenden ersten Prisma (8) oder der in der radialen Richtungskomponente (aᵣ) nachfolgenden Prismengruppe aus ersten Prismen (8) hinsichtlich eines wirksamen Lichtablenkungsvermögens unterscheiden, wobei die ersten Prismen (8) und/oder Prismengruppen aus ersten Prismen (8) in ihrer Abfolge bezüglich der radialen Richtungskomponenten (aᵣ) der Hauptabstrahlrichtung (a) eine schrittweise Änderung von einem entgegen der radialen Richtungskomponente (aᵣ) radial äußeren als Umlenkprisma dienenden ersten Prisma (8) zu einem in radialer Richtungskomponente (aᵣ) radial äußeren als Brechungsprisma dienenden ersten Prisma (8) aufweisen.

2. Leuchtmodul nach Anspruch 1, **dadurch gekennzeichnet, dass** die Prismenanordnung (6) als Prismenplatte (2) mit an einer Lichteingangsseite (10) angeordneten eingangsseitigen ersten Prismen (8) und/oder an einer Lichtausgangsseite (11) ausgangsseitigen ersten Prismen (8) ausgebildet ist, wobei die Lichteingangsseite (10) senkrecht zur optischen Achse (o) und parallel beabstandet zu einer Lichtaustrittsfläche (9) der Kollimatorlinse (5) angeordnet ist.

3. Leuchtmodul nach Anspruch 2, **dadurch gekennzeichnet, dass** die eingangsseitigen ersten Prismen (8) und die ausgangsseitigen ersten Prismen (8) jeweils eine als Wirkflanke (14) ausgebildete Flanke aufweisen, wobei bei den Brechungsprismen die Flächennormale der Wirkflanken (14) mit der vorgesehenen Richtung des dort auftreffenden Lichtes (L) zur Brechung des zumindest überwiegenden Anteiles des Lichtes (L) bei den eingangsseitigen ersten Prismen (8) einen ersten Winkel kleiner 89° und bei den ausgangsseitigen ersten Prismen (8) einen zweiten Winkel von mindestens 41° einschließt.

4. Leuchtmodul nach Anspruch 3, **dadurch gekennzeichnet, dass** die als Umlenkprismen dienenden, ausgangsseitigen ersten Prismen (8) jeweils zwei Wirkflanken, eine im Strahlengang des Lichtes der Wirkseite des eingangsseitigen ersten Prismas (8) nachfolgende erste Wirkflanke (14a) und eine der ersten Wirkflanke (14a) nachfolgende zweite Wirkflanke (14b), aufweisen, wobei an der ersten Wirkflanke (14a) eine Totalreflexion zur Richtungsänderung des Lichtes (L) und an der zweiten Wirkflanke (14b) die Auskopplung des Lichtes (L) aus der Prismenplatte (2) erfolgt.

5. Leuchtmodul nach einem der Ansprüche 2 bis 4, **dadurch gekennzeichnet, dass** die Prismenplatte (2) einen bezüglich einer Richtung (r) senkrecht zur radialen Richtungskomponente (aᵣ) der Hauptabstrahlrichtung (a) mittleren Bereich (15) mit den ersten Prismen (8) und beidseitig des mittleren Bereichs (15) jeweils einen radial äußeren Bereich (19) mit symmetrischen zweiten Prismen (17) aufweist, die sich zumindest in etwa parallel zu den ersten Prismen (8) erstrecken.

6. Leuchtmodul nach einem der Ansprüche 1 bis 5, **dadurch gekennzeichnet, dass** der Aufnahmeraum (3) in der Kollimatorlinse (5) integriert ist und von der Lichteintrittsfläche (7) begrenzt wird, wobei die Lichteintrittsfläche (7) einen bezüglich der optischen Achse (o) umfänglichen ersten Bereich (20) und einen zur Prismenanordnung (6) hin an den ersten Bereich (20) angrenzenden, radialen kreisrunden zweiten Bereich (21) aufweist.

7. Leuchtmodul nach Anspruch 6, **dadurch gekennzeichnet, dass** die Lichtaustrittsfläche (9) der Kollimatorlinse (5) einen radial mittig angeordneten inneren Abschnitt (22) mit kreisförmigem Umriss für das über den zweiten Bereich (21) in die Kollimatorlinse (5) eingekoppelte Licht (L) und einen radial an den inneren Abschnitt (22) anschließenden kreisringartigen äußeren Abschnitt (23) für das über den ersten Bereich (20) in die Kollimatorlinse (5) eingekoppelte Licht (L) aufweist.

8. Leuchtmodul nach Anspruch 7, **dadurch gekennzeichnet, dass** der innere Abschnitt (22) der Lichtaustrittsfläche (9) eine zur optischen Achse (o) achsensymmetrisch nach außen gewölbte Form und/oder der äußere Abschnitt (23) eine zur optischen Achse (o) achsensymmetrisch nach innen gewölbte Form aufweist.

9. Leuchtmodul nach Anspruch 8, **dadurch gekennzeichnet, dass** der äußere Abschnitt (23) nach innen gewölbt ausgebildet ist und ein wellenartiges Profil (31) aufweist.

10. Leuchtmodul nach einem der Ansprüche 1 bis 9, **dadurch gekennzeichnet, dass** das optische System (4) einen zumindest teilumfänglich zwischen Lichteintrittsfläche (7) und Lichtaustrittsfläche (9) vorgesehenen optischen Ausgang (25) zur Auskopplung von Teillicht aufweist, wobei das Teillicht von dem optischen Ausgang (25) in einen Lichtleiter (27) einspeisbar ist.

11. Leuchte mit einem Leuchtmodul gemäß einer der Ansprüche 1 bis 10.

12. Leuchte nach Anspruch 11, **dadurch gekennzeichnet, dass** bezüglich einer Längsrichtung der Leuchte endseitig jeweils mindestens ein Leuchtmodul so angeordnet ist, dass sich deren Hauptabstrahlrichtungen kreuzen.

13. Leuchte nach Anspruch 11, **dadurch gekennzeichnet, dass** jeweils endseitig mindestens zwei Leuchtmodule vorgesehen sind, wobei die Lichtleiter (27) zumindest einzelner Leuchtmodule (1) optisch leitend miteinander verbunden sind.

## Claims

1. Lighting module having an accommodation space (3) comprising a point light source and an optical system (4) for directing and at least partially collimating of the divergent light (L) emitted by the point light source,
- wherein the system (4) has a rotation symmetrical collimator lens (5) being optically coupled to the accommodation space (3) and having an optical axis (o) in which the point light source is located, and having a light entry surface (7) for the emitted light, as well as an arrangement of prisms (6) optically subsequent to the collimator lens (5) and comprising first prisms (8) extending longitudinally and vertically to the optical axis (o),
- wherein the collimator lens (5) is configured to deliver the divergent light (L) being launched through the light entry surface (7) to the subsequent arrangement of prisms (6) with a certain divergence, and
- wherein the first prisms (8) are arranged in a plane vertical to the optical axis,
**characterized in that**
- the first prisms are configured for deflecting the light asymetrically with respect to the optical axis (o) in a main radiation direction (a) at an angle (β) greater than zero with respect to the optical axis (o), wherein
- the first prisms (8) are configured and/or are arranged in a radial direction component (aᵣ) of the main radiation direction (a) so that a first prism (8) and/or a group of prisms consisting of first prisms (8) is different with respect to an effective light deflecting capability from a subsequent first prism (8) in the radial direction component (aᵣ) or the subsequent group of prisms consisting of first prisms (8) in the radial direction component (aᵣ) in order to direct the divergent light (L) into at least approximately parallel alignment, wherein
- the first prisms (8) and/or the groups of prisms consisting of first prisms (8) in their sequence with respect to the radial direction component (aᵣ) exhibit a step by step alteration from an opposite to the radial direction component (aᵣ) radially outermost first prism (8) functioning as a deflection prism to an outermost in the radial direction component (aᵣ) first prism (8) functioning as a refraction prism.

2. Lighting module according to claim 1, **characterized in that** the arrangement of prisms (6) is designed as a prism plate (2) having entry side first prisms (8) being arranged on a light entry side and/or exit side first prisms (8) being arranged on a light exit side, wherein the light entry side (10) is arranged vertically to the optical axis (o) and parallelly spaced to the light exit surface (9) of the collimator lens (5).

3. Lighting module according to claim 2, **characterized in that** the entry side first prisms (8) and the exit side first prisms (8) each have an edge being designed as effective edge (14), wherein with the refraction prisms the surface normal of the effective edges (14) encloses a first angle smaller than 89° at the entry site first prisms (8) and a second angle of at least 41° at the exit site first prisms (8) with the intended direction of the light (L) impinging there in order to refract at least the predominant part of the light (L).

4. Lighting module according to claim 3, **characterized in that** the exit side first prisms (8) functioning as deflection prisms each have two effective edges, one first effective edge (14a) subsequent to the entry site first prism (8) in the beam path of the light from the effective side and one second effective edge (14b) subsequent to the first effective edge (14a), wherein total refraction for changing the direction of the light (L) takes place at the first effective edge (14a) and decoupling of the light (L) from the prism plate (2) takes place at the second effective edge (14b).

5. Lighting module according to one of claims 2 to 4, **characterized in that** the prism plate (2) includes a region (15) central with respect to a direction (r) vertical to the radial direction component (aᵣ) of the main radiation direction (a) and including the first prisms (8) and on both sides of the central region (15) in each case includes a radially outer region (19) having symmetric second prisms (17), which extend at least approximately parallel to the first prisms (8).

6. Lighting module according to one of claims 1 to 5, **characterized in that** the accommodation space (3) is integrated in the collimator lens (5) and is defined by the light entry surface (7), wherein the light entry surface (7) has a first region (20) which is circumferential relative to the optical axis (o) and a radial circular second region (21) which is adjacent to the first region (20) in the direction of the prism arrangement (6).

7. Lighting module according to claim 6, **characterized in that** the light exit surface (9) of the collimator lens (5) has an inner section (22) for light (L) coupled into the collimator lens (5) through the second region (21) being arranged radially central and having a circular outline, and an outer section (23) for the light coupled into the collimator lens through the first region (20), having annular shape and being adjacent to the inner section (22).

8. Lighting module according to claim 7, **characterized in that** the inner section (22) of the light exit surface (9) has an outwardly curved shape axis-symmetrical to the optical axis (o) and/or the outer section (23) has an inwardly curved shape axis symmetrical to the optical axis (o).

9. Lighting module according to claim 8, **characterized in that** the outer section (23) is designed inwardly curved and has a wave-like profile (31).

10. Lighting module according to one of claims 1 to 9, **characterized in that** it has an optical exit (25) for decoupling of partial light provided between the light entry surface (7) and the light exit surface (9) and at least partially circumferential, wherein the partial light can be fed by the optical exit (25) into a light guide (27).

11. Lighting fixture having a lighting module according to one of claims 1 to 10.

12. Lighting fixture according to claim 11, **characterized in that** at least one lighting module is arranged on each end of the lighting fixture with reference to the longitudinal direction thereof in such a way that the main radiation directions intersect.

13. Lighting fixture according to claim 11, **characterized in that** at least two lighting modules are provided on each end, wherein the light guides (27) of at least individual lighting modules (1) are connected with each other optically conducting.

## Revendications

1. Module d'éclairage avec un espace de réception (3) comprenant une source lumineuse ponctuelle et un système optique (4) pour guider et collimater au moins partiellement la lumière divergente (L) émise par la source lumineuse ponctuelle,
le système (4) comportant une lentille collimatrice (5) symétrique en rotation qui est couplée optiquement à l'espace de réception (3) et présente un axe optique (o) dans lequel est disposée la source lumineuse ponctuelle, et comportant une surface d'entrée de lumière (7) pour la lumière émise, et comportant un dispositif à prismes (6) qui suit optiquement la lentille collimatrice (5) et qui présente des premiers prismes (8) s'étendent longitudinalement qui s'étendent perpendiculairement à l'axe optique (o), la lentille de collimateur (5) étant conçue pour émettre la lumière divergente (L) couplée par l'intermédiaire de la surface d'entrée de lumière (7) dans une divergence spécifique vers le dispositif à prismes suivant (6), et les premiers prismes (8) étant disposés dans un plan perpendiculaire à l'axe optique (o),
***caractérisé en ce que*** les premiers prismes sont conçus pour dévier la lumière (L) de manière asymétrique par rapport à l'axe optique (o) dans une direction de faisceau principal (a) selon un angle (β) supérieur à zéro par rapport à l'axe optique (o), dans lequel les premiers prismes (8) sont conçus de manière à diriger la lumière divergente (L) dans un alignement au moins approximativement parallèle et/ou sont disposés de manière l'un à l'autre selon une composante de direction radiale (aᵣ) de la direction de rayonnement principale (a), **en ce qu'**un premier prisme (8) et/ou un groupe de premiers prismes (8) diffère d'un premier prisme (8) suivant dans la composante de direction radiale (aᵣ) ou du groupe de prismes des premiers prismes (8) suivant dans la composante de direction radiale (aᵣ) par rapport à une capacité effective de déflection de lumière, les premiers prismes (8) et/ou groupes de prismes comprenant des premiers prismes (8) ayant dans leur séquence par rapport aux composantes de direction radiale (aᵣ) de la direction de rayonnement principale (a) un changement pas à pas d'un premier prisme (8) qui sert de prisme déflecteur et qui est radialement extérieur dans la direction opposée à la composante de direction radiale (aᵣ) à un premier prisme (8) qui sert de prisme de réfraction dans la composante de direction radiale (aᵣ) et qui est radialement extérieur dans la composante de direction radiale (aᵣ).

2. Module d'éclairage selon la revendication 1, ***caractérisé en ce que*** le dispositif à prismes (6) est réalisé comme plaque à prismes (2) avec des premiers prismes (8) sur le côté d'entrée disposés sur un côté d'entrée de lumière (10) et/ou des premiers prismes (8) sur le côté de sortie (11) d'un côté de sortie de lumière (11), le côté d'entrée de lumière (10) étant disposé perpendiculairement à l'axe optique (o) et espacé parallèlement à une surface de sortie de lumière (9) de la lentille collimatrice (5).

3. Module d'éclairage selon la revendication 2, ***caractérisé en ce que*** les premiers prismes (8) sur le côté d'entrée et les premiers prismes (8) sur le côté de sortie présentent chacun un flanc réalisé sous la forme d'un flanc actif (14), la normale de surface des flancs actifs (14) avec la direction prévue de la lumière (L) qui y est incidente pour réfracter la partie au moins prédominante de la lumière (L) comprenant un premier angle inférieur à 89° pour les premiers prismes (8) côté entrée et un second angle inférieur ou égal à 41° pour les premiers prismes (8) côté sortie dans le cas des prismes de réfraction.

4. Module d'éclairage selon la revendication 3, ***caractérisé en ce que*** les premiers prismes (8) servant de prismes de déviation côté sortie présentent chacun deux flancs actifs, un premier flanc actif (14a) suivant le côté actif du premier prisme (8) côté entrée dans le trajet de la lumière et un second flanc actif (14b) suivant le premier flanc actif (14a), dans laquelle une réflexion totale pour changer la direction de la lumière (L) a lieu au niveau du premier flanc actif (14a) et la lumière (L) est découplée de la plaque à prismes (2) au niveau du second flanc actif (14b).

5. Module d'éclairage selon l'une des revendications 2 à 4, ***caractérisé en ce que*** la plaque à prismes (2) présente une zone (15) centrale par rapport à une direction (r) perpendiculaire à la composante (aᵣ) de direction radiale de la direction principale de rayonnement (a) avec les premiers prismes (8), et une zone (19) radialement extérieure respective qui présente, de chaque côté de la zone centrale (15), des deuxièmes prismes symétriques (17) qui s'étendent au moins approximativement parallèlement aux premiers prismes (8).

6. Module d'éclairage selon l'une des revendications 1 à 5, ***caractérisé en ce que*** l'espace de réception (3) est intégré dans la lentille collimatrice (5) et est délimité par la surface d'entrée de lumière (7), la surface d'entrée de lumière (7) ayant une première région (20) circonférentielle par rapport à l'axe optique (o) et une seconde région circulaire radiale (21) adjacente à la première région (20) vers le dispositif à prismes (6).

7. Module d'éclairage selon la revendication 6, ***caractérisé en ce que*** la surface de sortie de lumière (9) de la lentille collimatrice (5) présente une section intérieure (22) disposée radialement au centre avec un contour circulaire pour la lumière (L) couplée dans la lentille collimatrice (5) via la seconde région (21) et une section extérieure (23) radialement annulaire adjacente à la section intérieure (22) pour la lumière (L) couplée dans la lentille collimatrice (5) via la première région (20).

8. Module d'éclairage selon la revendication 7, ***caractérisé en ce que*** la section intérieure (22) de la surface de sortie de lumière (9) a une forme incurvée symétriquement vers l'extérieur par rapport à l'axe optique (o) et/ou la section extérieure (23) a une forme incurvée symétriquement vers l'intérieur par rapport à l'axe optique (o).

9. Module d'éclairage selon la revendication 8, ***caractérisé en ce que*** la section extérieure (23) a une forme incurvée vers l'intérieur et présente un profil (31) de forme ondulée.

10. Module d'éclairage selon l'une des revendications 1 à 9, ***caractérisé en ce que*** le système optique (4) présente une sortie optique (25) qui est prévue au moins partiellement circonférentiellement entre la surface d'entrée de lumière (7) et la surface de sortie de lumière (9) pour découpler la lumière partielle, la lumière partielle pouvant être amenée par la sortie optique (25) dans un guide optique (27).

11. Dispositif d'éclairage avec un module d'éclairage selon l'une des revendications 1 à 10.

12. Dispositif d'éclairage selon la revendication 11, ***caractérisé en ce qu'***au moins un module d'éclairage est disposé à chaque extrémité par rapport à une direction longitudinale du dispositif d'éclairage de telle sorte que ses principales directions de rayonnement se croisent.

13. Dispositif d'éclairage selon la revendication 11, ***caractérisé en ce qu'***au au moins deux modules d'éclairage sont prévus à chacune des extrémités, les guides de lumière (27) d'au moins des modules d'éclairage individuels (1) étant reliés entre eux de manière optiquement conductrice.
